Europäisches Patentamt

European Patent Office

Office européen des brevets

(11) Veröffentlichungsnummer: **0 244 658**
**A2**

(12) **EUROPÄISCHE PATENTANMELDUNG**

(21) Anmeldenummer: **87105217.1**

(51) Int. Cl.⁴: **B60R 11/02**

(22) Anmeldetag: **08.04.87**

Die Bezeichnung der Erfindung wurde geändert (Richtlinien für die Prüfung im EPA, A-III, 7.3).

(30) Priorität: **28.04.86 DE 3614386**

(43) Veröffentlichungstag der Anmeldung:
**11.11.87 Patentblatt 87/46**

(84) Benannte Vertragsstaaten:
**CH DE FR IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Fischelmayer, Heinrich c/o**
**GRUNDIG E.M.V.**
**Max Grundig holländ Stiftung & Co KG**
**Kurgartenstrasse 37 D-8510 Fürth/Bay.(DE)**
Erfinder: **Nohse,Dieter,Dipl.-Ing.(FH),c/o**
**GRUNDIG E.M.V.**
**Max Grundig holländ Stiftung & Co KG**
**Kurgartenstrasse 37 D-8510 Fürth/Bay.(DE)**

(54) **Autoradio mit einer Diebstahlsicherungseinrichtung.**

(57) Autoradio mit einer codierbaren Sicherungsschaltung, die eine Benutzung des Autoradios nur nach Eingabe einer bestimmten Ziffernfolge mittels der vorhandenen Radio-Bedientaste ermöglicht, wobei die Sicherungsschaltung eine lösbare Sperreinrichtung aufweist, die die Codierbarkeit verhindert bzw. freigibt.

## AUTORADIO

Die Erfindung bezieht sich auf ein Autoradio mit einer codierbaren Sicherungsschaltung gemäß dem Oberbegriff des Anspruchs 1.

Es sind Autoradios bekannt, die im Sinne eines Diebstahlschutzes eine Sicherungsschaltung aufweisen, die die Benutzung des Autoradios nur dann ermöglichen, sofern durch entsprechende Maßnahmen die eingebaute Sicherungsschaltung die Inbetriebsetzung des Autoradios erlaubt. Die Sicherungsschaltung ist über die Radio-Bedientasten codierbar,und die interne Schaltungssperre wird erst nach Eingabe einer vorgegebenen Ziffernfolge aufgehoben. Hierfür werden integrierte Schaltelemente verwendet, die gleichzeitig Bestandteil der Radio-Schaltung sind. Kann die Sperrcodierung der Sicherungsschaltung nicht aufgehoben werden, bleibt das Gerät unbrauchbar und eine aufwendige Reparatur ist erforderlich. Natürlich kann damit ein Diebstahl nicht direkt verhindert werden. Wohl aber ist der Diebstahl eines solchermaßen geschützten Autoradios uninteressant. Durch entsprechende Hinweise am Auto, z. B. durch einen Aufkleber,ist auf ein derartig diebstahlgeschütztes Autoradio aufmerksam zu machen. Die technische Möglichkeit für einen solchermaßen ausgeführten Diebstahlschutz ist durch die in der Geräteschaltungstechnik bereits vorhandenen Mikroprozessoren in Verbindung mit einfachen elektronischen Speichern ohne größeren Aufwand gegeben. Ist nun ein derart vorbereitetes Gerät programmiert, dann kann es nur durch die Person in Betrieb gesetzt werden, die die für die Programmierung gewählte Ziffernfolge kennt.

Nachteilig ist hierbei, daß durch eine beabsichtigte oder unbeabsichtigte beliebige Codierung das betreffende Autoradio unbrauchbar gemacht werden kann. Für die Funktionsprüfung eines noch nicht codierten neu eingebauten Autoradios ist eine allgemeine der Montagestelle bekannte Codierung erwünscht, die dann allerdings nicht veränderbar sein soll bis der Kunde einen nur ihm bekannten Code eingibt.

Die der Erfindung zugrundeliegende Aufgabe besteht nun darin, eine Möglichkeit zu schaffen, die eine unerwünschte Codierung verhindert oder durch die eine eingegebene Codierung, solange es gewünscht ist, nicht ohne weiteres verändert werden kann.

Diese Aufgabe wird durch die kennzeichnenden Merkmale im Anspruch 1 gelöst.

Die Unteransprüche zeigen Ausgestaltungen der Erfindung.

Die Erfindung wird nachfolgend anhand einer Zeichnung erläutert.

Die gezeichnete Figur zeigt in perspektivischer Darstellung den rückwärtigen Teil eines Autoradios 1 und läßt über einen aufgebrochen dargestellten Gehäuseteil erkennen, daß sich im Inneren des Gehäuses eine Leiterplatte 2 mit Schaltungselementen und eine Stellschraube 3 befindet. Im dargestellten Beispiel ist die Stellschraube in einen im Inneren des Gehäuses befindlichen Winkel eingeschraubt und drückt mit ihrem Gewindeschaft auf die Leiterplatte 2. Die Stellschraube ist durch eine kleine Öffnung 5 in der Gehäusewand des Autoradios mittels eines Schraubenziehers 6 zugänglich. Wird die Stellschraube z. B. in Richtung Leiterplatte gedreht, so überbrückt sie zwei Leiterzüge und sperrt die Codierbarkeit der Sicherungsschaltung. Durch eine entsprechend ausgebildete Kunststoffkappe kann die Öffnung 5 im Gehäuse des Autoradios verschlossen und plombiert werden. Denkbar ist auch, daß die Stellschraube 3 nicht direkt auf die Leiterplatte aufdrückt, sondern die Kontaktgabe über eine Kontakt-Feder vorgenommen wird, oder daß umgekehrt eine Kontaktfeder von einer Kontakt-Anlagestelle abgehoben wird. Es sind auch andere Ausführungsmöglichkeiten für eine Sperreinrichtung an der im Autoradio befindlichen Sicherungsschaltung denkbar. So kann die Stellschraube durch ein in der Leiterplatte vorgesehenes ausbrechbares Brückenteil ersetzt werden. Erst durch das Ausbrechen des Brückenteils aus der Leiterplatte ist durch eine Leitungstrennung die Codierbarkeit der Sicherungsschaltung möglich.

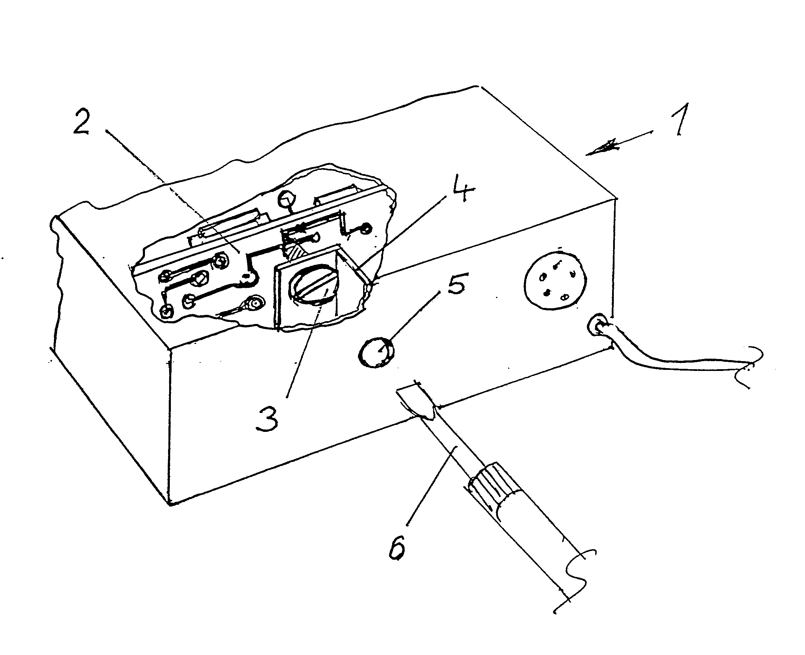

## Ansprüche

1. Autoradio mit einer codierbaren Sicherungsschaltung, die eine Benutzung des Autoradios nur nach Eingabe einer bestimmten Ziffernfolge mittels der vorhandenen Radio-Bedientasten ermöglicht oder verhindert, **dadurch gekennzeichnet,** daß der Sicherungsschaltung eine lösbare Sperreinrichtung zugeordnet ist, daß die Sperreinrichtung bedarfsweise die Codierbarkeit sperrt oder verhindert, daß die eingegebene Codierung veränderbar ist, und daß die Sperreinrichtung im Gehäuse des Autoradios derart angeordnet ist, daß diese nur mittels eines Hilfsgeräts zugänglich und betätigbar ist.

2. Autoradio nach Anspruch 1, **dadurch gekennzeichnet,** daß die Sperreinrichtung aus einer Stellschraube (3) besteht, die eine vorbestimmte Leitung auf der Leiterplatte (2) der Sicherungsschaltung unterbricht oder an Masse legt, und daß die Stellschraube über eine Öffnung (5) im Gehäuse des Autoradios (1) zugänglich ist.

3. Autoradio nach den Ansprüchen 1 und 2, **dadurch gekennzeichnet,** daß die Zugänglichkeit durch das Autoradio-Gehäuse plombierbar ist.